# EUROPEAN PATENT APPLICATION

(11) **EP 4 606 552 A1**
(43) Date of publication of application: **27.08.2025**
(21) Application number: 23880121.1
(22) Date of filing: 13.10.2023
(51) Int. Cl.: B29C 45/76, B29C 45/26, B29C 45/78

(54) **INJECTION MOLDING MACHINE**

(30) Priority: 18.10.2022 KR 20220134374; 12.10.2023 KR 20230135695
(71) Applicant: LS Mtron Ltd., Anyang-si, Gyeonggi-do 14119 (KR)
(72) Inventor: PARK, Kyong Ho, Anyang-si Gyeonggi-do 14119 (KR)
(74) Representative: K&L Gates LLP
(86) International application number: PCT/KR2023/015800
(87) International publication number: WO 2024/085543

(57) **Abstract**

The present invention is directed to an injection molding machine. The injection molding machine according to the present invention compares its own first molding condition with a second molding condition from auxiliary equipment, and, when the first molding condition and the second molding condition are different from each other, synchronizes the first molding condition with the second molding condition or provides notification that the first molding condition and the second molding condition are different from each other. According to the present invention, confusion in the operation of auxiliary equipment and the management of data may be prevented.

## Description

### Technical Field

The present invention relates to an injection molding machine, and more particularly, to technology for managing data on molding conditions.

### Background Art

Injection molding machines are apparatuses that produce molded products by injecting molten raw material into cavities.

Injection molding machines are provided with molds for forming cavities.

Injection molding machines are of the common type that obtains a molded product by filling a cavity with molten raw material, or may be of the blow molding type that injects air to obtain a molded product having a special shape such as a cylinder.

Injection molding machines are usually used together with various types of auxiliary equipment.

For example, such auxiliary equipment may be a temperature control device for adjusting the temperature condition of a mold in an injection molding machine. The temperature control device may be classified and provided as a device that controls the temperature of a mold by means of an electric heater (particularly in the case where a hot runner is applied) or a device that controls the temperature of a mold by means of cooling water.

For example, such auxiliary equipment may be a material supply device for supplying raw material according to a supply condition.

For example, such auxiliary equipment may be a take-out robot device for taking out a produced molded product according to a take-out condition.

In addition, various types of auxiliary equipment may be added depending on the type of molded product.

The setting conditions set for auxiliary equipment, such as the above temperature condition, supply condition, and take-out condition, may be collectively called molding conditions for the molding of an appropriate molded product.

In general injection molding, the desirable production of a molded product is considerably sensitive to set molding conditions. Accordingly, molding conditions need to have optimal values for the production of an appropriate molded product.

Molding conditions are determined by reflecting therein basic data for the production of the molded product, the data applied in previous production, the special circumstances caused by the use of the injection molding machine, the current work environment of the factory, the administrator's empirical rules, and/or the like.

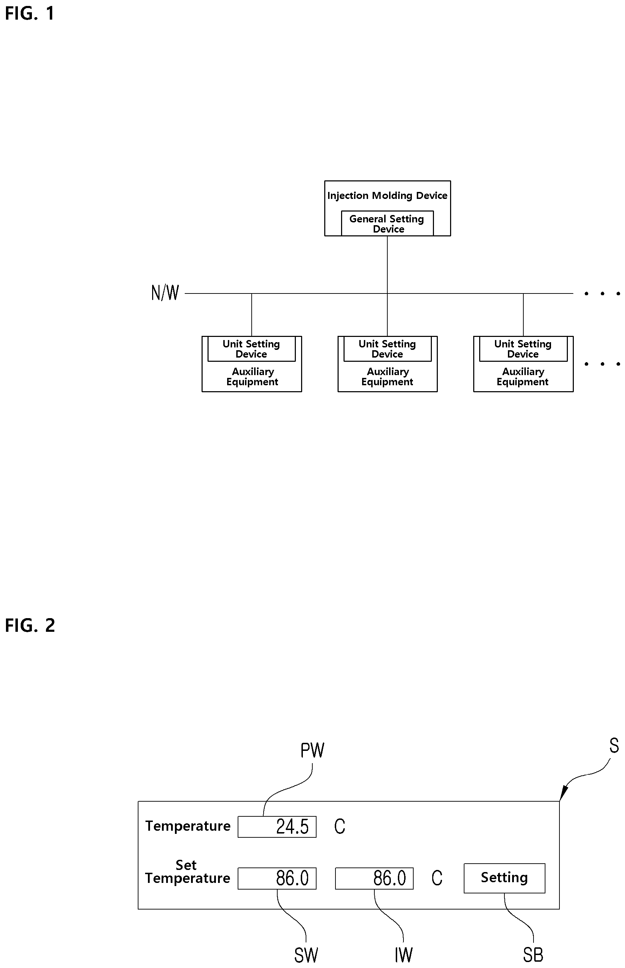

Meanwhile, as shown in the reference view of FIG. 1, recently, an injection molding machine is configured to communicate with each piece of auxiliary equipment over a network N/W. Accordingly, the injection molding machine is provided with a general setting device, and the auxiliary equipment is provided with a unit setting device.

The general setting device and the unit setting device communicate with each other over the network N/W, and may be used for an administrator to enter a molding condition or to display a molding condition.

The administrator may enter a molding condition for individual pieces of auxiliary equipment by using the general setting device, or may input a molding condition for each piece of auxiliary equipment by using the unit setting device.

Referring to FIG. 2, there will be described an example for setting a temperature value, which is one molding condition, in a general setting device.

A screen provided by the general setting device is provided with a current window PW, an input window IW, a setting window SW, and a setting button SB.

The current window PW displays a current temperature value currently measured by auxiliary equipment. In this case, the current temperature value may be, for example, a current temperature value for a hot runner mounted on a mold.

The input window IW displays a first temperature value, which is a first molding condition, entered by an administrator via the general setting device of an injection molding machine.

The setting window SW displays a second temperature value, which is a second molding condition, set in the unit setting device of auxiliary equipment. In this case, the second temperature value may be a value transmitted from the general setting device to the unit setting device, or may be a value individually entered and set by an administrator in the unit setting device and then received by the general setting device. Then, the auxiliary equipment is operated to follow a temperature condition according to the second temperature value in the setting window SW. For example, the auxiliary equipment is operated such that a hot runner has the second temperature value in the setting window SW. Furthermore, in a normal and desirable state, the second temperature value is the same as the first temperature value.

The setting button SB is used to input an administrator's command to set the second temperature value for the auxiliary equipment to the first temperature value in the input window IW.

When the reference diagram of FIG. 2 is followed, there are three paths for the administrator to set the temperature value of the auxiliary equipment.

One of the paths is a path via which the first temperature value is input using the general setting device. The administrator enters the first temperature value (86.0) in the input window IW, and then manipulates the setting button SB. Then, the first temperature value (86.0) is transmitted to the unit setting device over the network N/W, and the unit setting device sets the second temperature value to be the same as the first temperature value (86.0).

One of the paths is a path via which the first temperature value (86.0) is loaded using the general setting device. When the administrator loads the first temperature value (86.0) stored in the general setting device, the general setting device displays the loaded first temperature value (86.0) in the input window IW. Furthermore, the general setting device transmits the first temperature value (86.0) to the unit setting device, and the unit setting device sets the second temperature value to be the same as the first temperature value (86.0). Then, the set second temperature value (86.0) is transmitted from the unit setting device to the general setting device, and the general setting device displays the second temperature value (86.0), received from the unit setting device, in the setting window SW.

One of the paths is a path via which a temperature value is entered using the unit setting device. The administrator may enter and set the second temperature value by using the unit setting device.

For reference, the second temperature value entered by the unit setting device is transmitted to the general setting device over the network, and the general setting device displays the second temperature value (86.0). received from the unit setting device, in the setting window PW. In this case, the display value of the input window IW and the display value of the setting window PW may become different from each other. Then, the administrator modifies the first temperature value of the input window IW into the second temperature value (86.0) of the setting window PW as needed.

However, the above-described conventional method of setting a molding condition has the following inconveniences:

First, the first molding condition of the input window IW and the second molding condition of the setting window SW may be different from each other.

For example, when an administrator enters and sets the second molding condition via the unit setting device, the first molding condition and the second molding condition may become different from each other, as described above. Then, when the administrator is replaced, there may be confusion as to whether the first molding condition or the second molding condition is appropriate.

Second, when the administrator newly enters the second molding condition in the unit setting device, the first molding condition displayed in the input window IW needs to be changed into the second molding condition in the general setting device in order to prevent confusion.

For example, in the state in which the first molding condition is displayed as 50 degrees in the input window IW and the second molding condition is displayed as 50 degrees in the setting window SW, the administrator may set the second molding condition to 40 degrees in the unit setting device. Then, the unit setting device transmits the second molding condition to the general setting device, and the general setting device modifies the second molding condition in the setting window SW into 40 degrees. Accordingly, the first molding condition (50 degrees) in the input window IW and the second molding condition (40 degrees) in the setting window SW become different from each other. Therefore, the administrator needs to modify the first molding condition in the input window IW into 40 degrees, which is the same as the second molding condition in the setting window SW, in order to prevent confusion. Meanwhile, when there are many pieces of auxiliary equipment, the number of input windows IW and setting windows SW increases. Therefore, it may not be easy to check displayed values requiring modification while comparing displayed values displayed in the input windows IW with displayed values displayed in the setting windows SW.

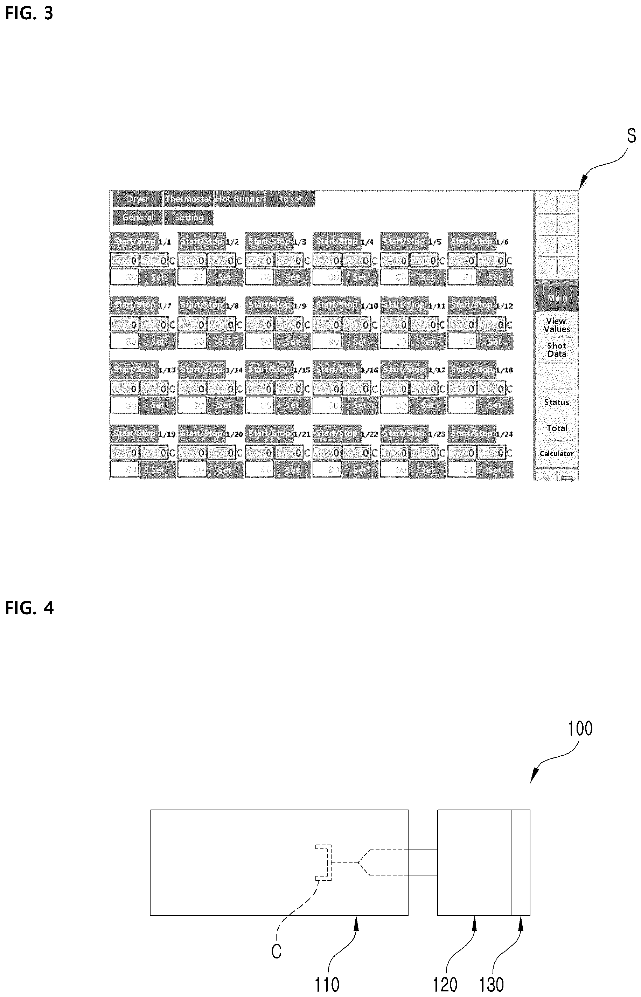

Moreover, in the case of a large-scale mold, the mold may have at least a dozen or more temperature setting zones, or at most, more than a hundred temperature setting zones. Accordingly, as shown in the screen S illustrated in FIG. 3 as an example, each temperature control zone has an input window IW and a setting window SW. Therefore, the task of modifying the first molding conditions into the second molding conditions by entering the above values while checking the numerical values of the displayed values may be a considerably tiring task. Furthermore, modification work may be overlooked and missed.

Third, errors may occur in the storage of molding conditions.

As described above, when a molded product is changed, molding conditions also need to be changed due to the replacement of raw material or a mold. However, the process of finding and entering the molding conditions is a considerably cumbersome process. To omit this process, the general setting device is implemented to store a molding condition for a molded product that has been produced.

Meanwhile, when the second molding condition displayed in the setting window IW and the second molding condition displayed in the input window IW are different from each other, confusion may occur in the storage of data. To prevent this, the general setting device is implemented to store the first molding condition displayed in the input window IW. However, the second molding condition in the setting window SW may be a value appropriately reflected in the process of operating auxiliary equipment, and thus, there is a high probability that the second molding condition is an appropriate molding condition that corresponds to an actual field situation. Therefore, the administrator needs to modify the first molding conditions displayed in the input windows IW into the second molding conditions and then save the molding conditions. Furthermore, as discussed above, such work may be considerably cumbersome.

Furthermore, when there are a lot of molding conditions, the modification of data in the input windows IW may be missed. Then, incorrect molding conditions may be saved. As a result, there may occur errors in which molded products are produced based on incorrect molding data in the future.

### [Conventional Art Literature]

### [Patent Literature]

Korean Patent No. 10-2567133

### Disclosure

### Technical Problem

The present invention has been conceived from the contemplation of technology that may manage molding conditions so that confusion as to the molding conditions can be minimized.

### Technical Solution

An injection molding machine according to a first aspect of the present invention includes: a molding device configured to form a cavity by means of a mold so that a molded product can be produced in the cavity or to open the cavity so that the produced molded product can be taken out; an injection device configured to inject molten resin into the cavity formed by the molding device; and a general setting device configured to set a molding condition for at least one piece of auxiliary equipment that forms a molding environment required for production of a molded product while being auxiliary to the molding device and the injection device; the general setting device includes: a communication means configured to communicate with a unit setting device in the auxiliary equipment to exchange a molding condition with the unit setting device; a storage means configured to store a molding condition for the auxiliary equipment; an output means configured to output a molding condition for the auxiliary equipment; an input means configured to input a molding condition for the auxiliary equipment or input a command required by an administrator; and a control means configured to control the communication means, the storage means, and the output means in response to a manipulation of the input means; and the control means includes: a comparison part configured to compare a first molding condition for control of the auxiliary equipment in the general setting device with a second molding condition received from the unit setting device via the communication means; and a synchronization part configured to change (hereinafter referred to as 'synchronize') the first molding condition so that the first molding condition becomes a same as a value of the second molding condition.

When a synchronization command according to the manipulation of the input means is input, the control means performs control to operate the synchronization part to perform synchronization.

When a storage command according to the manipulation of the input means is input, the control means performs control to operate the synchronization part to perform synchronization and then allow the synchronized first molding condition to be stored in the storage means.

The control means may further include a notification part configured to, when it is determined by the comparison part that the first molding condition and the second molding condition are different from each other, provide notification that the first molding condition and the second molding condition are different from each other via the output means.

The notification part outputs the first molding condition and the second molding condition onto the screen of the output means so that they can be distinguished from each other by the difference in color.

The first molding condition of molding conditions output by the output means is any one of the data loaded from the storage means, the data input by the administrator via the input means, and the data synchronized by the synchronization part.

A screen output via the output means has: an input window in which the first molding condition input by the administrator via the general setting device is displayed; and a setting window in which the second molding condition set in the unit setting device of the auxiliary equipment is displayed; and, when the administrator loads the molding condition stored in the storage means by manipulating the input means, the molding condition loaded from the storage means is automatically displayed in the input window and the setting window.

An injection molding machine according to a second aspect of the present invention includes: a molding device configured to form a cavity having a product shape so that molten resin injected into the cavity is solidified to produce an injection-molded product or to open the cavity so that the produced molded product can be taken out; an injection device configured to inject molten resin into the cavity formed by the molding device; and a general setting device configured to set a molding condition for at least one piece of auxiliary equipment that forms a molding environment required for production of a molded product while being auxiliary to the molding device and the injection device; the general setting device includes: a communication means configured to communicate with a unit setting device in the auxiliary equipment to exchange a molding condition with the unit setting device; a storage means configured to store a molding condition for the auxiliary equipment; an output means configured to output a molding condition for the auxiliary equipment; an input means configured to input a molding condition for the auxiliary equipment or input a command required by an administrator; and a control means configured to control the communication means, the storage means, and the output means in response to a manipulation of the input means; and the control means includes: a comparison part configured to compare a second molding condition received from the unit setting device via the communication means with a first molding condition provided in advance; and a notification part configured to, when it is determined by the comparison part that the second molding condition and the first molding condition are different from each other, provide notification that the first molding condition and the second molding condition are different from each other via the output means.

The notification part outputs the first molding condition and the second molding condition onto the screen of the output means so that they can be visually distinguished from each other.

### Advantageous Effects

According to the present invention, the following effects are achieved:

First, the task of matching the molding condition of the general setting device and the molding condition of the unit setting device to each other is considerably convenient.

Second, the error in which incorrect data is stored during a molding condition storage process does not occur.

Third, there is almost no room for confusion as to the setting and synchronization of molding conditions.

Therefore, the management and setting of molding conditions may be conveniently and accurately performed ultimately, so that the reliability of the injection molding machine is improved.

### Description of Drawings

FIG. 1 is a reference view illustrating the connection relationship between an injection molding machine and pieces of auxiliary equipment;
FIGS. 2 and 3 are reference views illustrating the entry of molding conditions using a general setting device in an injection molding machine;
FIG. 4 is a schematic diagram of an injection molding machine according to one example of the present invention;
FIG. 5 is a reference view illustrating the connection relationship between the injection molding machine of FIG. 4 and pieces of auxiliary equipment;
FIG. 6 is a configuration diagram of a general setting device according to a first embodiment applied to the injection molding machine of FIG. 4;
FIG. 7 shows one example of a screen output by an output means applied to the general setting device of FIG. 6;
FIG. 8 is a configuration diagram of a control means applied to the general setting device of FIG. 6;
FIG. 9 is a reference view illustrating the characteristic operation of the general setting device according to the first embodiment applied to the injection molding machine of FIG. 4;
FIG. 10 is a reference view illustrating a general setting device according to a second embodiment applied to the injection molding machine of FIG. 4; and
FIGS. 11 to 13 are reference views illustrating a general setting device according to a fourth embodiment applied to the injection molding machine of FIG. 4.

### Mode for Invention

Preferred embodiments according to the present invention will be described with reference to the accompanying drawings. For brevity of description, descriptions of well-known or redundant configurations will be omitted or abridged as much as possible.

### <Description of First Embodiment>

FIG. 4 is a schematic diagram of an injection molding machine 100 according to one example of the present invention.

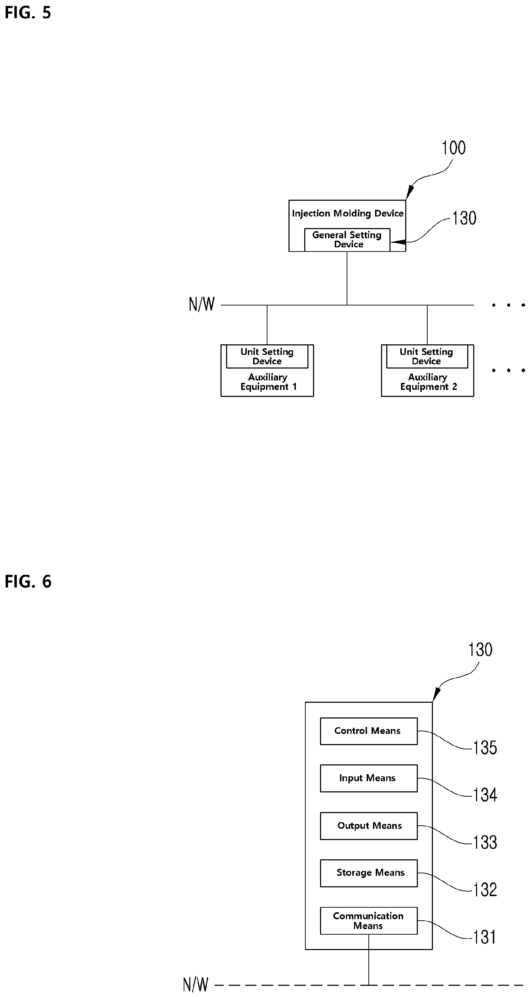

The injection molding machine 100 according to the present invention is installed to communicate with a plurality of pieces of auxiliary equipment (auxiliary equipment 1, and auxiliary equipment 2) by a network N/W, as shown in FIG. 5.

The pieces of auxiliary equipment form a molding environment required for producing a molded product while being auxiliary to a molding device 110 and an injection device 120 constituting the injection molding machine. However, for ease of description, the two pieces of auxiliary equipment shown in FIG. 5 are both intended as temperature control devices for controlling the temperature of a mold. That is, in the present embodiment, the temperature value is intended and described as a molding condition.

In addition, although only the two pieces of auxiliary equipment are directly shown in FIG. 5, more pieces of auxiliary equipment may be provided to communicate with the injection molding machine 100. However, it is sufficient if the injection molding machine 100 according to the present invention is connected to at least one piece of auxiliary equipment.

The injection molding machine 100 is provided with a general setting device 130, and each piece of auxiliary equipment is provided with a unit setting device.

The general setting device 130 is intended to comprehensively set and manage molding conditions for all pieces of auxiliary equipment, and the unit setting device is intended to set and manage molding conditions for each piece of auxiliary equipment. This will be described in detail later.

The injection molding machine 100 of FIG. 4 includes the molding device 110, the injection device 120, and a general setting device 130.

The molding device 110 may form a molding space or open a cavity C by means of a mold. In this example, the cavity C has the same shape as a molded product.

When the molding device 110 forms the cavity C, molten resin is injected into the cavity C and solidified within the cavity C, thereby producing a molded product.

When the molding device 110 opens the cavity C, the produced molded product may be taken out.

The injection device 120 injects molten resin into the cavity C when the molding device 110 forms the cavity C. To this end, the injection device 120 is implemented to accommodate a particulate raw material, melt the accommodated particulate raw material, and inject it into the cavity C.

The general setting device 130 is provided to set molding conditions for all the pieces of auxiliary equipment that are auxiliary to the injection molding machine 100.

The general setting device 130 may be implemented to additionally set molding conditions for the injection molding machine 100 itself. For example, the general setting device 130 may be implemented to set the mold opening/closing time of the molding device 110, the strength or duration of the holding pressure, the operating time of the injection device 110, and/or the like. Accordingly, the general setting device 130 may be implemented as a component of a control device that controls the general operation of the injection molding machine 100.

The present invention is characterized by the general setting device 130. Accordingly, the general setting device 130 will be discussed in more detail below.

As shown in FIG. 6, the general setting device 130 according to a first embodiment of the present invention includes a communication means 131, a storage means 132, an output means 133, an input means 134, and a control means 135.

The communication means 131 is provided to communicate with a unit setting device in each of the pieces of auxiliary equipment. That is, the general setting means 130 may perform communication for the exchange of molding conditions with the unit setting device via the communication means 131. For example, a first temperature value, which is a first molding condition input from the general setting device 130, may be transmitted to the unit setting device via the communication means 131. Furthermore, a second temperature value, which is a second molding condition input and set from the unit setting device, may be received by the general setting device 130 via the communication means 131.

The storage means 132 is provided to store molding conditions for the pieces of auxiliary equipment.

The storage means 132 stores molding conditions separately for each of the molds that can be applied to the injection molding machine 100. The reason for this is that molding conditions may vary with the mold.

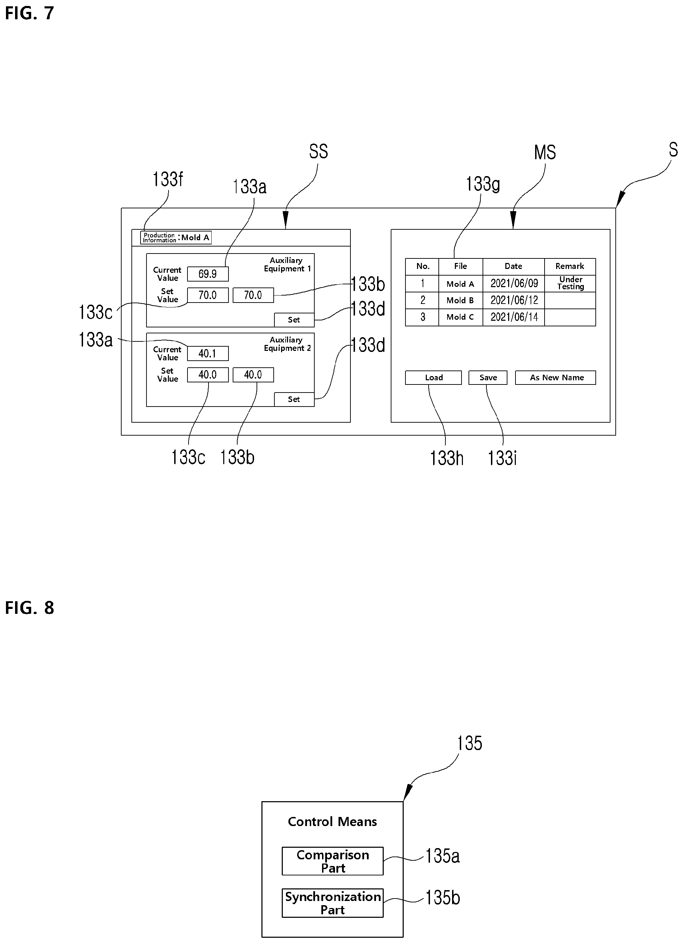

The output means 133 may output molding conditions for the auxiliary equipment. The output means 133 in the present embodiment is implemented to output a screen S that allows a user to visually recognize various types of related information, as in the example of FIG. 7.

The input means 134 is provided to input molding conditions for the auxiliary equipment.

In addition, the input means 134 is provided to input commands according to the needs of an administrator. In this case, the commands according to the needs of the administrator may be commands such as the setting of molding conditions for the auxiliary equipment, the storage of molding conditions, and the execution of synchronization.

According to a preferred example of the present invention, the output means 133 and the input means 134 are implemented via a single touch screen. Accordingly, the molding conditions or the administrator's commands may be input onto the screen S output by the output means 133. It may also be contemplated that the output means 133 and the input means 134 are provided as separate objects.

For reference, the screen S of FIG. 7 shows a case where two pieces of auxiliary equipment are applied as an example.

Referring to FIG. 7, the screen S output via the output means 133 has a setting area SS and a mold area MS.

The setting area SS is provided to display molding conditions for the auxiliary equipment or to input and set the molding conditions. To this end, current windows 133a, input windows 133b, setting windows 133c, setting buttons 133d, and a production information window 133f are provided in the setting area SS. In this case, the current window 133a, the input window 133b, and the setting windows 133c need to be provided separately for each of the pieces of auxiliary equipment.

The current window 133a displays a current temperature value currently measured by the auxiliary equipment. In this case, the current temperature value may be, for example, a current temperature value for a specific point of a mold or a current temperature value for a hot runner mounted on a mold.

The input window 133b displays a first temperature value, which is a first molding condition input by the administrator via the general setting device 130.

In addition, the input window 133b may be implemented to have an input function. For example, an implementation may be made such that, when the administrator touches the input window 133b with a finger (or a sensing tool; hereinafter collectively referred to as a finger), an input mark in the form of a scroll bar is generated, so that the first temperature value can be entered. In this manner, when the administrator directly enters the first molding condition in the input window 133b, the first molding condition displayed in the input window 133b is naturally the data entered by the administrator via the input means 134.

The setting window 133c displays a second temperature value, which is a second molding condition set in the unit setting device of the auxiliary equipment. In this case, the second temperature value may be a first temperature value transmitted from the general setting device 130 to the unit setting device. Furthermore, the second temperature value may be a value individually entered by the administrator in the unit setting device, and may be a value received by the general setting device 130 from the unit setting device.

That is, the setting window 133c displays the second temperature value currently set in the unit setting device. It is obvious that the auxiliary equipment operates to follow the second temperature value in the setting window 133c.

The setting button 133d is provided to set the second temperature value of the auxiliary equipment. That is, the administrator may input a command to set the second temperature value of the auxiliary equipment via the setting button 133d. For example, when the user touches the setting button 133d with a finger, the general setting device 130 transmits the first temperature value, present in the input window 131b, to the unit setting device. Then, the unit setting device modifies the second temperature value so that the second temperature value becomes the same as the first temperature value. Accordingly, the auxiliary equipment operates to follow the second temperature value that is modified into the first temperature value.

The production information window 133f displays information about a mold currently applied to the injection molding machine 100. Accordingly, the administrator may check the mold currently applied to the injection molding machine 100 via the production information window 133f, and may roughly check whether the information in the setting area SS matches the corresponding mold.

The mold area MS is provided to display molds and manage molding conditions for each of the molds.

A list window 133g, a load button 133h, and a save button 133i are provided in the mold area MS.

The list window 133g displays a list of molds for which data on molding conditions is currently stored.

The load button 133h is used to load a temperature value for a specific one of the molds in the list window 133g and display it in the setting area SS.

For example, the administrator may touch a specific mold in the list window 133g with his or her finger and then touch the load button 133h with his or her finger. That is, the administrator may input a command to load a molding condition for the specific mold, stored by the storage means 132, by operating the input means 134. Then, the general setting device 130 loads a temperature value, which is a molding condition for the specific mold stored by the storage means 132, as the first temperature value and displays it in the input window 133b. That is, the first molding condition displayed in the input window 133b may be the data loaded from the storage means 132. It is obvious that the newly loaded mold is also displayed in the production information window 133f.

In addition, the general setting device 130 transmits the temperature value for the specific mold, loaded from the storage means 132, to the unit setting device. Accordingly, the unit setting device sets the temperature value for the specific mold as the second temperature value, and the auxiliary equipment operates to follow the set second temperature value.

It is obvious that the load button 133h may be used appropriately when the injection molding machine 100 is operated again after a pause or when the mold is replaced.

The save button 133i is used to save molding conditions for current pieces of auxiliary equipment.

The save button 133i may be used to store molding conditions, which are factors that provide a current molding environment, by associating them with a mold when the administrator determines that a current molding environment is an optimal state for obtaining the highest quality molded product.

For example, the administrator may input a save command by touching the save button 133i with his or her finger. That is, the administrator may input a command to save a molding condition by operating the input means 134. Then, the general setting device 130 associates a value, which is the same as the second temperature value currently set in the auxiliary equipment, with a currently applied mold, and stores them. This process will be described in more detail.

According to the first embodiment, the temperature value stored by the storage means 132 is the first temperature value displayed in the input window 133b. Meanwhile, after the on-site administrator modifies and sets the second temperature value in the unit setting device, he or she may not modify and set the first temperature value in the general setting device. Then, the first temperature value displayed in the input window 133b and the second temperature value set in the auxiliary equipment, which is an optimal temperature value, may be different from each other. Since the second temperature value set in the auxiliary equipment is displayed in the setting window 133c, the first temperature value displayed in the input window 133b and the second temperature value displayed in the setting window 133c may be different from each other as a result. In this case, the general setting device 130 first modifies the first temperature value displayed in the input window 133b into the second temperature value displayed in the setting window 133c, and then stores the first temperature value that has been modified into the second temperature value and displayed in the input window 133b.

Meanwhile, the control means 135 controls the communication means 131, the storage means 132, and the output means 133 in response to the manipulation of the input means 134.

According to the first embodiment, the control means 135 has a comparison part 135a and a synchronization part 135b, as shown in FIG. 8.

The comparison part 135a checks whether the first temperature value, which is the first molding condition, and the second temperature value, which is the second molding condition, are the same as or different from each other through comparison therebetween. In this case, the first temperature value is a value displayed in the input window 133b, and the second temperature value is a value displayed in the setting window 133c after being received from the unit setting device.

The synchronization part 135b matches the first temperature value, which is the first molding condition, to the second temperature value, which is the second molding condition. That is, the synchronization part 135b changes (hereinafter referred to as 'synchronizes') the first molding condition so that the value of the first molding condition is the same as the value of the second molding condition.

According to the first embodiment, the synchronization part 135b is operated when the administrator touches the save button 133i with his or her finger to save molding conditions. That is, the synchronization part 135b is operated when the administrator inputs a command to save molding conditions by operating the input means 134.

Next, the characteristic operation of the injection molding machine 100 according to the present invention will be described using a usage example of the above injection molding machine 100.

When the injection molding machine 100 is operated together with the auxiliary equipment after molding conditions have been set, the administrator may modify and set the second temperature value in the unit setting device by considering the specific situations of the injection molding machine 100 and the auxiliary equipment or various surrounding environments. In this case, the second temperature value to be set may be a different value from the first temperature value displayed in the input window 133b of the general setting device 130. Then, the unit setting device transmits the modified second temperature value to the general setting device 130. Accordingly, the control means 135 modifies the second temperature value displayed in the setting window 133c into the second temperature value received from the unit setting window.

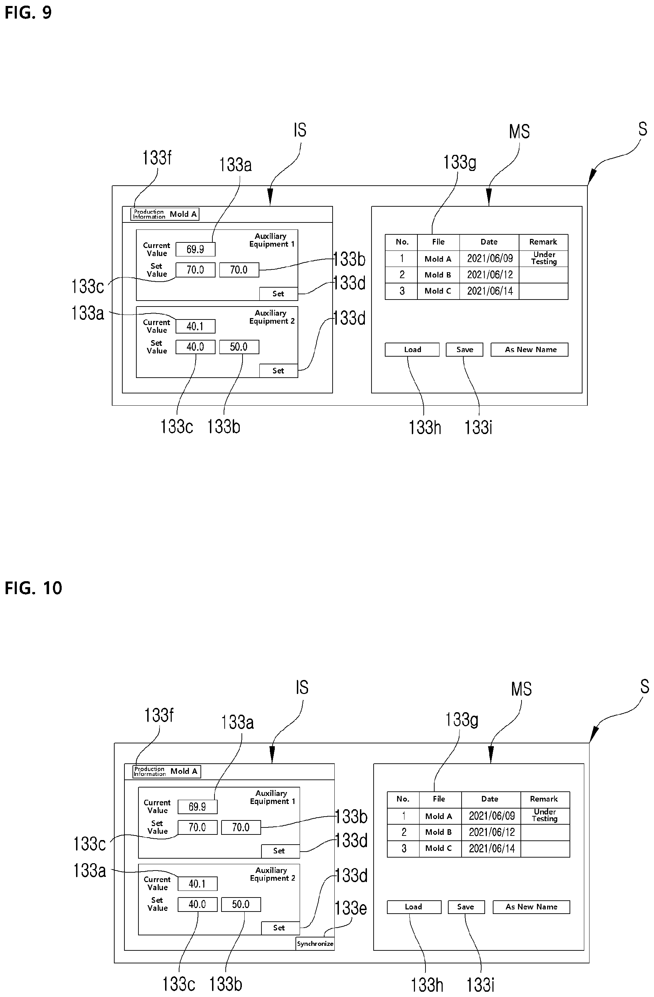

Accordingly, as shown in FIG. 9, the second temperature value (40.0) displayed in the setting window 133c assigned to auxiliary equipment 2 and the first temperature value (50.0) displayed in the input window 133b become different from each other.

Thereafter, the administrator may operate the save button 133i by using his/her finger in order to save current molding conditions. Accordingly, the control means 135 compares the first temperature value (50.0) displayed in the input window 133b with the second temperature value (40.0) displayed in the setting window 133c by operating the comparison part 135a. According to this comparison, the control means 135 may become aware that the first temperature value (50.0) and the second temperature value (40.0) are different from each other. In this case, the control means 135 synchronizes the first temperature value and the second temperature value by operating the synchronization part 135b. It is obvious that the first temperature value displayed in the input window 133b is modified into the second temperature value displayed in the setting window 133c through synchronization. Accordingly, after the synchronization, the first temperature value (40.0) displayed in the input window 133b and the second temperature value (40.0) displayed in the setting window 133c become the same as each other. That is, the first molding condition displayed in the input window 133b after the synchronization by the synchronization part 135b is synchronized data having a value that matches the value of the second molding condition.

When the synchronization is completed, the control means 135 associates the mold information displayed in the production information window 133f with the first temperature value displayed in the input window 133b and then stores them by controlling the storage means 132. The data stored in this manner may be reused through future loading.

### <Second Embodiment>

According to a second embodiment, an implementation may be made such that the administrator can input a command to execute synchronization by manipulating the input means 134. For example, the second embodiment may be implemented in a form in which a synchronization button 133e is displayed on a screen S output by the output means 133, as shown in FIG. 10.

The synchronization button 133e is provided to match the first temperature value, which is the first molding condition displayed in the input window 133b, and the second temperature value, which is the second molding condition displayed in the setting window 133c, to each other by the administrator's command. It is obvious that the matching of the first temperature value and the second temperature value is achieved through the synchronization in which the first temperature value is modified into the second temperature value.

For example, the administrator may input a synchronization command by manipulating the synchronization button 133e with his or her finger. Then, the control means 135 compares the first temperature value displayed in the input window 133b with the second temperature value displayed in the setting window 133c to check whether they are the same by first operating the comparison part 135a. Then, when the first temperature value and the second temperature value are not the same as each other, the control means 135 performs synchronization by operating the synchronization part 135b, and then modifies the first temperature value in the input window 133b into the second temperature value in the setting window 133c and displays it by controlling the output means 133. In other words, instead of undergoing a separate cumbersome input process to modify the first temperature value, the administrator may simply modify the first temperature value via the synchronization button 133e.

Furthermore, according to the example of FIG. 10, it can be seen that an implementation is made such that, when the administrator manipulates the synchronization button 133e, molding conditions for all the pieces of auxiliary equipment are synchronized at one time. Accordingly, when the example of FIG. 10 is followed, a molding condition that is not synchronized and omitted during the synchronization process will not occur.

However, depending on the implementation, an implementation may be made such that a separate synchronization button is provided for each piece of auxiliary equipment.

### <Third Embodiment>

According to a third embodiment, synchronization is performed when molding conditions are saved, as in the first embodiment. In addition, as in the second embodiment, a synchronization button 133e is provided on the input means 134, so that a usage form that is the same as the usage form of the second embodiment is also supported.

That is, the third embodiment is implemented in a form in which the first and second embodiments are combined together.

### <Fourth Embodiment>

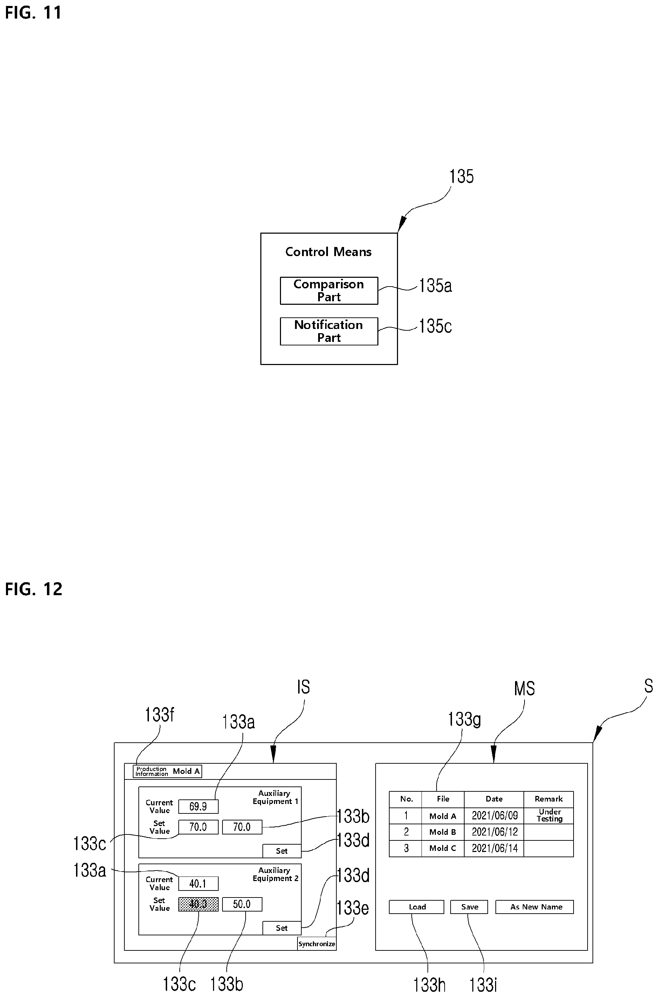

According to a fourth embodiment, a control means 135 includes a comparison part 135a and a notification part 135c, as shown in FIG. 11.

The comparison part 135a checks whether the first temperature value, which is the first molding condition, and the second temperature value, which is the second molding condition, are the same as or different from each other by comparing the first temperature value and the second temperature value with each other.

The notification part 135c provides notification that the first temperature value and the second temperature value are different from each other via the output means 133 when the first temperature value and the second temperature value are different from each other. Accordingly, the administrator may check the notification provided by the notification part 135c, and may modify the first temperature value into the second temperature value and enter a resulting value.

According to the fourth embodiment, an implementation is made such that, when the first temperature value (50.0) of the input window 133b and the second temperature value (40.0) of the setting window 133c are different from each other as shown in FIG. 12, the background color of the setting window 133c is represented in a different color (e.g., red or blue) from the background color of the input window 133b. It is obvious that the opposite may be implemented such that the background color of the input window 133b is represented in a different color from the background color of the setting window 133c. It is obvious that the colors of the letters displayed in the input window 133b and the setting window 133c may be different or the types of lines thereof may be different. That is, the notification part 135c outputs the first temperature value (50.0) and the second temperature value (40.0) onto the screen S of the output means 133 so that they can be visually distinguished from each other. For example, by making the font colors or background colors of the first temperature value and the second temperature value different from each other, the administrator may easily determine that the first temperature value (50.0) and the second temperature value (40.0) are different from each other through the difference in color.

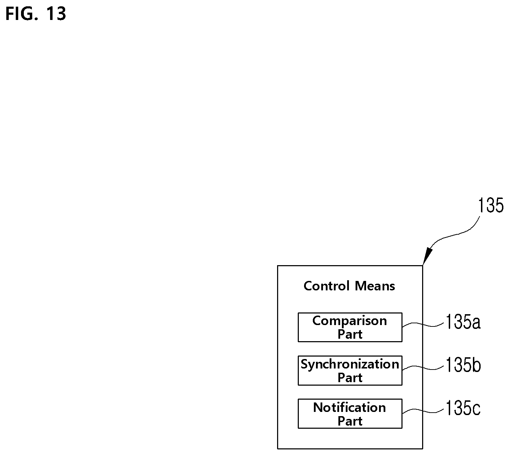

For reference, this fourth embodiment may be implemented in combination with any one of the first, second and third embodiments described above. In this case, as shown in FIG. 13, the control means 135 includes the comparison part 135a, a synchronization part 135b, and the notification part 135c.

### <Fifth Embodiment>

A fifth embodiment is directed to the loading of saved data.

When the administrator selects a specific mold from among the molds in the list window 133g and then manipulates the load button 133h, data on the specific mold is loaded into the setting area SS. An example of this will be described with reference to FIG. 7.

For example, when the administrator selects mold B and then manipulate the load button 133h, data on a molding condition for mold B is displayed in the input window 133b and setting window 133c of the setting area SS. More specifically, when the saved molding condition for mold B is a temperature value of 50 degrees, 50 degrees is displayed as the first temperature value, which is the first molding condition, in the input window 133b. Furthermore, the first temperature value (50 degrees) entered in the input window 133b is automatically transmitted to the unit setting device. Accordingly, the setting of the unit setting device is converted into 50 degrees, and the auxiliary equipment operates to follow 50 degrees, which is the converted molding condition. Therefore, the displayed value of the current window 133a becomes close to the value of the input window 133b and the setting window 133c.

In addition, the first temperature value of the input window 133b is displayed as 50 degrees by the loading, and also the second temperature value of the setting window 133c is automatically displayed as 50 degrees. That is, an implementation is made such that, when the loading is executed, a loaded molding condition is automatically displayed in both the input window 133b and the setting window 133c.

### <Additional Information>

The present invention may be more preferably applied when the number of pieces of auxiliary equipment is large and thus the number of input windows 133b and setting windows 133c is large, rather than when the number of pieces of auxiliary equipment is small and thus the number of input windows 133b and setting windows 133c is small.

In addition, when a mold is equipped with hot runners of multiple zones (e.g., more than 10 zones), an input window 133b and a setting window 133c need to be provided for each of the zones. That is, the number of input windows 133c and setting windows 133c also increases in accordance with the number of zones. Accordingly, as more molds equipped with hot runners of multiple zones are used, the present invention may be applied more preferably in order to prevent confusion in the management of data.

The above-described embodiments have been described merely using preferred examples of the present invention, and may have various application forms. Therefore, the present invention should not be understood as being limited to the content described above. Instead, the scope of the rights of the present invention should be understood as encompassing the separately described claims and their equivalents.

## Claims

1. An injection molding machine, comprising:
a molding device (110) configured to form a cavity (C) by means of a mold so that a molded product can be produced in the cavity (C) or to open the cavity (C) so that the produced molded product can be taken out;
an injection device (120) configured to inject molten resin into the cavity (C) formed by the molding device (110); and
a general setting device (130) configured to set a molding condition for at least one piece of auxiliary equipment that forms a molding environment required for production of a molded product while being auxiliary to the molding device (110) and the injection device (120);
wherein the general setting device (130) comprises:
a communication means (131) configured to communicate with a unit setting device in the auxiliary equipment to exchange a molding condition with the unit setting device;
a storage means (132) configured to store a molding condition for the auxiliary equipment;
an output means (133) configured to output a molding condition for the auxiliary equipment;
an input means (134) configured to input a molding condition for the auxiliary equipment or input a command required by an administrator; and
a control means (135) configured to control the communication means (131), the storage means (132), and the output means (133) in response to a manipulation of the input means (134); and
wherein the control means (135) comprises:
a comparison part (135a) configured to compare a first molding condition for control of the auxiliary equipment in the general setting device (130) with a second molding condition received from the unit setting device via the communication means (131); and
a synchronization part (135b) configured to change (hereinafter referred to as 'synchronize') the first molding condition so that the first molding condition becomes a same as a value of the second molding condition.

2. The injection molding machine of claim 1, wherein, when a synchronization command according to a manipulation of the input means (134) is input, the control means (135) performs control to operate the synchronization part (135b) to perform synchronization.

3. The injection molding machine of claim 1, wherein, when a storage command according to a manipulation of the input means (134) is input, the control means (135) performs control to operate the synchronization part (135b) to perform synchronization and then allow the synchronized first molding condition to be stored in the storage means (132).

4. The injection molding machine of claim 1, wherein the control means (135) further comprises a notification part (135c) configured to, when it is determined by the comparison part (135a) that the first molding condition and the second molding condition are different from each other, provide notification that the first molding condition and the second molding condition are different from each other via the output means (133).

5. The injection molding machine of claim 4, wherein the notification part (135c) outputs the first molding condition and the second molding condition onto a screen (S) of the output means (133) so that they can be distinguished from each other by a difference in color.

6. The injection molding machine of claim 1, wherein the first molding condition of molding conditions output by the output means (133) is any one of data loaded from the storage means (132), data input by the administrator via the input means (134), and data synchronized by the synchronization part (135b).

7. The injection molding machine of claim 1, wherein:
a screen (S) output via the output means (133) has:
an input window (133b) in which the first molding condition input by the administrator via the general setting device (130) is displayed; and
a setting window (133c) in which the second molding condition set in the unit setting device of the auxiliary equipment is displayed; and
when the molding condition stored in the storage means (132) is loaded by manipulation of the input means (134) by the administrator, the molding condition loaded from the storage means (132) is automatically displayed in the input window (133b) and the setting window (133c).

8. An injection molding machine, comprising:
a molding device (110) configured to form a cavity (C) having a product shape so that molten resin injected into the cavity (C) is solidified to produce an injection-molded product or to open the cavity (C) so that the produced molded product can be taken out;
an injection device (120) configured to inject molten resin into the cavity (C) formed by the molding device (110); and
a general setting device (130) configured to set a molding condition for at least one piece of auxiliary equipment that forms a molding environment required for production of a molded product while being auxiliary to the molding device (110) and the injection device (120);
wherein the general setting device (130) comprises:
a communication means (131) configured to communicate with a unit setting device in the auxiliary equipment to exchange a molding condition with the unit setting device;
a storage means (132) configured to store a molding condition for the auxiliary equipment;
an output means (133) configured to output a molding condition for the auxiliary equipment;
an input means (134) configured to input a molding condition for the auxiliary equipment or input a command required by an administrator; and
a control means (135) configured to control the communication means (131), the storage means (132), and the output means (133) in response to a manipulation of the input means (134); and
wherein the control means (135) comprises:
a comparison part (135a) configured to compare a second molding condition received from the unit setting device via the communication means (131) with a first molding condition provided in advance; and
a notification part (135c) configured to, when it is determined by the comparison part (135a) that the second molding condition and the first molding condition are different from each other, provide notification that the first molding condition and the second molding condition are different from each other via the output means (133).

9. The injection molding machine of claim 8, wherein the notification part (135c) outputs the first molding condition and the second molding condition onto a screen (S) of the output means (133) so that they can be visually distinguished from each other.
